# EUROPEAN PATENT APPLICATION

(11) **EP 4 718 736 A1**
(43) Date of publication of application: **01.04.2026**
(21) Application number: 25203024.2
(22) Date of filing: 18.09.2025
(51) Int. Cl.: H04B 3/00

(54) **DETECTION METHOD AND CORRESPONDING DETECTION DEVICE**

(30) Priority: 27.09.2024 US 202463700076 P; 01.09.2025 TW 114133429
(71) Applicant: Formerica OptoElectronics Inc., Zhubei City, Hsinchu 30265 (TW)
(72) Inventor: LIU, Peter Sin-Te, 30265 Zhubei City, Hsinchu County (TW); LIU, Joseph Chen-Kwo, 30265 Zhubei City, Hsinchu County (TW); YEH, Jack Hung-Fu, 30265 Zhubei City, Hsinchu County (TW); CHEN, Tom Yu-Jen, 30265 Zhubei City, Hsinchu County (TW); CHIANG, Justin Chih-Chun, 30265 Zhubei City, Hsinchu County (TW)
(74) Representative: Becker, Eberhard

(57) **Abstract**

A detection method and a corresponding detection device are provided for detecting the signal transmission performance of a signal cable in a detection liquid, wherein the detection device is configured to accommodate the detection liquid, and the signal cable is immersed in the detection liquid to perform a simulated operation, thereby detecting the signal transmission performance of the signal cable in the detection liquid; as such, the signal transmission performance of the signal cable in the detection liquid can be pre-evaluated before the signal cable is actually applied.

## Description

### CROSS-REFERENCE TO RELATED APPLICATIONS

This application claims the priority of United States Patent Application No. 63700076 filed on September 27, 2024 and the priority of Republic of China Patent Application No.114133429 filed on September 1, 2025, in the State Intellectual Property Office of the R.O.C., the disclosure of which is incorporated herein by reference.

### BACKGROUND OF THE INVENTION

### Field of the Invention

The present application relates to a detection method and a detection device for the detection method, and more particularly, to a detection method and its corresponding detection device for detecting signal transmission performance of a signal cable in a detection liquid.

### Descriptions of the Related Art

With the large-scale development of network infrastructure, network equipment is typically required to operate continuously for extended periods to process and transmit large volumes of data. During operation, the network equipment generates substantial heat, causing its operating temperature to rise over time. When the operating temperature of the network equipment exceeds a safe temperature threshold, it may lead to operational instability or even reduce the service life of the equipment. Therefore, how to effectively dissipate heat from the network equipment during operation has become an important issue of concern in the technical field. In the current technology, liquid cooling has been widely adopted for heat dissipation of the network equipment. For example, the network equipment may be directly immersed in a heat dissipation liquid with high thermal conductivity, allowing the liquid to quickly carry away the heat generated during operation and effectively lower the operating temperature of the network equipment to below the safety threshold, thereby ensuring stable long-term operation of the network equipment.

In addition, in practical applications, the network equipment is often used in conjunction with signal cables to transmit signals. To achieve the required heat dissipation for the network equipment, the signal cables also need to be immersed in the aforementioned heat dissipation liquid. However, the signal transmission performance of the signal cables in the heat dissipation liquid may differ from that in an atmospheric environment and may not meet expectations.

Unfortunately, current technologies lack feasible solutions to detect the signal transmission performance of the signal cables in the heat dissipation liquid before the signal cables can be practically used in conjunction with the network equipment. In other words, there is currently no way to confirm whether the signal cables would have the expected signal transmission performance in the heat dissipation liquid, prior to immersing them along with the network equipment in the heat dissipation liquid. Therefore, it is a pressing technical challenge in the field to find a technical solution to detect the signal transmission performance of the signal cables in the heat dissipation liquid in advance.

### SUMMARY OF THE INVENTION

In view of the foregoing problems in the prior art, the primary objective of the present application is to provide a detection method and a corresponding detection device for pre-detecting the signal transmission performance of a signal cable prior to an actual application of the signal cable.

In view of the drawbacks of the prior art mentioned above, the present application provides a detection device, configured to detect signal transmission performance of a signal cable in a detection liquid, comprising: a detection tank comprising a liquid accommodation space and a non-liquid accommodation space, wherein the liquid accommodation space is configured to accommodate the detection liquid, and the signal cable is immersed in the detection liquid within the liquid accommodation space; and a detection module comprising a detection substrate, the detection substrate comprising a substrate dry zone, a substrate wet zone, a substrate detection unit, and a substrate engaging port, wherein the substrate detection unit is located in the substrate dry zone, the substrate engaging port is located in the substrate wet zone, and the detection module is inserted into the detection tank, such that the substrate dry zone is disposed in the non-liquid accommodation space, enabling the substrate detection unit to generate a detection signal in the non-liquid accommodation space, and the substrate wet zone is disposed in the liquid accommodation space, allowing the substrate engaging port to engage the signal cable in the detection liquid and transmit the detection signal to the signal cable, so as to make the signal cable perform a simulated signal transmission operation of the signal cable in the detection liquid and thereby to detect the signal transmission performance of the signal cable in the detection liquid.

Preferably, the detection device said above, further comprising a detection tank stopper assembly assembled in the detection tank and located between the liquid accommodation space and the non-liquid accommodation space, wherein the detection tank stopper assembly is configured to block the detection liquid from seeping from the liquid accommodation space into the non-liquid accommodation space, thereby preventing the detection liquid from affecting generation of the detection signal by the substrate detection unit.

Preferably, the detection device said above, wherein the liquid accommodation space comprises a substrate wet zone subspace and a non-substrate wet zone subspace, with the substrate wet zone being disposed in the substrate wet zone subspace, wherein the detection tank stopper assembly further comprises a detection tank stopper liquid guiding structure located in the substrate wet zone subspace and configured to guide the detection liquid to flow from the substrate wet zone subspace to the non-substrate wet zone subspace or from the non-substrate wet zone subspace to the substrate wet zone subspace.

Preferably, the detection device said above, wherein at least a portion of the detection tank stopper assembly is immersed in the detection liquid, and the non-liquid accommodation space is located within the detection tank stopper assembly.

Preferably, the detection device said above, wherein the detection module further comprises a detection cable, and the detection device further comprises a detection tank cable guiding assembly, wherein the detection tank cable guiding assembly is assembled in the detection tank and passes through the detection tank stopper assembly into the non-liquid accommodation space to guide the detection cable to enter the non-liquid accommodation space, such that the detection cable is connected to the detection substrate within the non-liquid accommodation space, enabling the substrate detection unit to generate the detection signal.

Preferably, the detection device said above, wherein the detection tank stopper assembly is a chamber-shaped component, and the detection tank cable guiding assembly is a tubular component.

Preferably, the detection device said above, further comprising a substrate stopper assembly assembled on the detection substrate and located between the substrate dry zone and the substrate wet zone, wherein the substrate stopper assembly is configured to block the detection liquid from seeping from the substrate wet zone into the substrate dry zone, thereby preventing the detection liquid from affecting generation of the detection signal by the substrate detection unit.

Preferably, the detection device said above, further comprising a cooling fan disposed on the substrate stopper assembly and facing the substrate wet zone to provide cooling for the substrate wet zone.

Preferably, the detection device said above, wherein the detection substrate further comprises a substrate engaging side and a substrate non-engaging side, and the substrate wet zone comprises a substrate engaging side sub-wet zone and a substrate non-engaging side sub-wet zone, wherein the substrate engaging side sub-wet zone is located at the substrate engaging side, the substrate engaging port is located in the substrate engaging side sub-wet zone, and the substrate non-engaging side sub-wet zone is located at the substrate non-engaging side and adjacent to the substrate engaging side sub-wet zone; the substrate dry zone comprises a substrate engaging side sub-dry zone and a substrate non-engaging side sub-dry zone, wherein the substrate engaging side sub-dry zone is located at the substrate engaging side, and the substrate non-engaging side sub-dry zone is located at the substrate non-engaging side; and the substrate stopper assembly comprises a substrate engaging side sub-stopper assembly and a substrate non-engaging side sub-stopper assembly, wherein the substrate engaging side sub-stopper assembly is assembled on the substrate engaging side and located between the substrate engaging side sub-wet zone and the substrate engaging side sub-dry zone and is configured to block the detection liquid from seeping from the substrate engaging side sub-wet zone into the substrate engaging side sub-dry zone, and the substrate non-engaging side sub-stopper assembly is assembled on the substrate non-engaging side and located between the substrate non-engaging side sub-wet zone and the substrate non-engaging side sub-dry zone and is configured to block the detection liquid from seeping from the substrate non-engaging side sub-wet zone into the substrate non-engaging side sub-dry zone.

Preferably, the detection device said above, wherein the substrate stopper component is assembled on the substrate engaging port.

Preferably, the detection device said above, wherein the substrate stopper component is assembled on the substrate engaging port.

Preferably, the detection device said above, wherein the substrate stopper assembly is movable in a longitudinal or transverse direction to reach a position for being assembled to the detection substrate, so as to assemble the substrate stopper assembly onto the detection substrate.

Preferably, the detection device said above, wherein the detection tank further comprises a non-liquid space liquid guiding structure located in the non-liquid accommodation space and configured to guide the detection liquid to flow from the non-liquid accommodation space to the liquid accommodation space.

Preferably, the detection device said above, wherein the substrate dry zone is obliquely disposed in the non-liquid accommodation space and is configured to guide the detection liquid to flow in a specific direction away from the substrate dry zone.

Preferably, the detection device said above, wherein the detection module further comprises a detection cable, and the detection device further comprises a detection tank cable guiding assembly assembled in the detection tank and configured to guide the detection cable to enter the non-liquid accommodation space, such that the detection cable is connected to the detection substrate in the non-liquid accommodation space, enabling the substrate detection unit to generate the detection signal.

Additionally, the present application provides a detection method configured to detect signal transmission performance of a signal cable in a detection liquid, the detection method comprising: providing a detection tank, wherein the detection tank comprises a liquid accommodation space and a non-liquid accommodation space, and the liquid accommodation space is configured to accommodate the detection liquid; providing a detection module, wherein the detection module comprises a detection substrate, the detection substrate comprising a substrate dry zone, a substrate wet zone, a substrate detection unit, and a substrate engaging port, wherein the substrate detection unit is located in the substrate dry zone, and the substrate engaging port is located in the substrate wet zone; placing the detection module into the detection tank, such that the substrate dry zone is disposed in the non-liquid accommodation space, and the substrate wet zone is disposed in the liquid accommodation space; and immersing the signal cable in the detection liquid within the liquid accommodation space to engage the substrate engaging port, and enabling the substrate detection unit to generate a detection signal in the non-liquid accommodation space and transmit the detection signal to the signal cable through the substrate engaging port, so as to make the signal cable perform a simulated signal transmission operation in the detection liquid, and thereby to detect the signal transmission performance of the signal cable in the detection liquid.

Compared with the prior art, the detection method and the corresponding detection device of the present application are configured to detect the signal transmission performance of a signal cable in a detection liquid. The detection device comprises a detection tank and a detection module, wherein the detection tank comprises a liquid accommodation space and a non-liquid accommodation space, the liquid accommodation space being configured to accommodate the detection liquid, and the signal cable being immersed in the detection liquid within the liquid accommodation space; and the detection module is configured to generate a detection signal in the non-liquid accommodation space and to further engage the signal cable in the liquid accommodation space, so as to transmit the detection signal to the signal cable, thereby allowing the signal cable to perform a simulated signal transmission operation of the signal cable in the detection liquid and thereby to detect the signal transmission performance of the signal cable in the detection liquid.

### BRIEF DESCRIPTION OF THE DRAWINGS

The above and other aspects, features and other advantages of the present invention will be more clearly understood from the following detailed description taken in conjunction with the accompanying drawings, in which:
Figure 1 is a schematic diagram showing a state of a detection device of the present application immersed in a heat dissipation liquid.
Figure 2 is a schematic cross-sectional diagram showing a detection device of the present application.
Figure 3 is another schematic cross-sectional diagram showing a detection device of the present application.
Figure 4 is yet another schematic cross-sectional diagram showing a detection device of the present application.
Figure 5 is a schematic cross-sectional diagram showing partial components of a detection device of the present application.
Figure 6 is another schematic cross-sectional diagram showing partial components of a detection device of the present application.
Figure 7 is a schematic diagram showing partial components of a detection module of the present application in a state according to an embodiment.

### DETAILED DESCRIPTION OF THE PREFERRED EMBODIMENT

Embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

In addition, it should be noted that, for the sake of clarity and simplicity, the same reference numerals will be used in the following embodiments to refer to components comprising the same or similar functions, and repeated or equivalent descriptions will be omitted.

The present application provides a detection method and a corresponding detection device, which are configured to detect the signal transmission performance of a signal cable in a detection liquid. The detection device is configured to accommodate the detection liquid, and the signal cable is immersed in the detection liquid to simulate operation, thereby enabling detection of the signal transmission performance of the signal cable. In this way, the signal transmission performance of the signal cable in the detection liquid can be preliminarily detected before actual application.

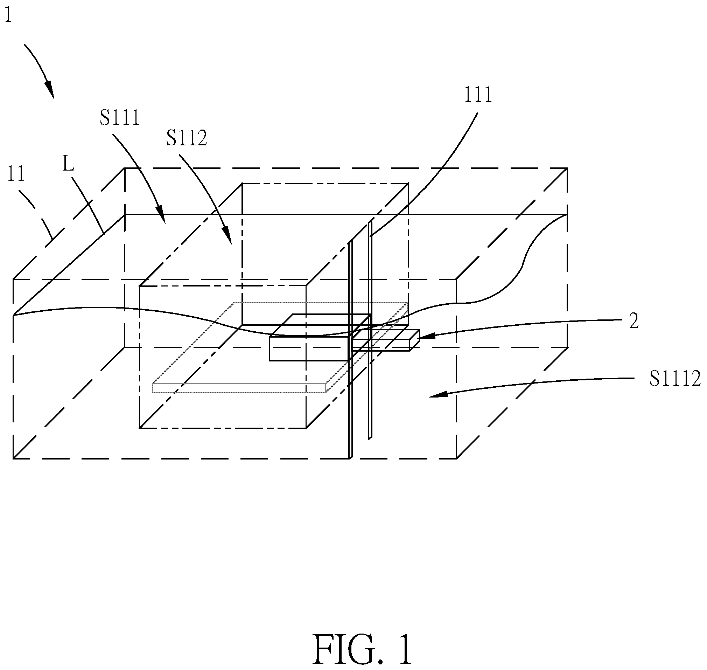

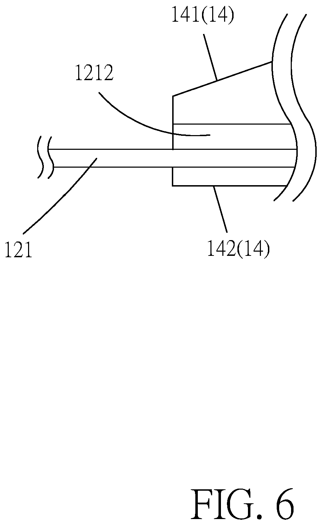

For a detailed description of the embodiments disclosed in the present application, please refer to figures 1 to 7.

In the embodiments shown in figures 1 to 7, at least one detection method and detection device 1 is provided, which is mainly configured to detect the signal transmission performance of a signal cable 2 in a detection liquid L. It should be noted that the detection liquid L may optionally be a heat dissipation liquid comprising high thermal conductivity, such that the detection liquid L dissipates heat from the signal cable 2. The signal cable 2 is configured to transmit signals and may be an active optical cable (AOC), a direct attach copper cable (DAC), an active electrical cable or active copper cable (AEC or ACC), a CAT6A network cable, or other types of communication cables.

In the above embodiment, the detection device 1 comprises a detection tank 11 and a detection module 12.

Regarding the detection tank 11, the detection tank 11 comprises liquid accommodation space S111 and a non-liquid accommodation space S112. It should be noted that the liquid accommodation space S111 is configured to accommodate the detection liquid L so as to provide a liquid environment for detecting the signal transmission performance of the signal cable 2.

Regarding the detection module 12, the detection module 12 comprises detection substrate 121. The detection substrate 121 comprises a substrate dry zone Z1211, a substrate wet zone Z1212, a substrate detection unit 1211, and a substrate engaging port 1212. The substrate detection unit 1211 is located in the substrate dry zone Z1211, and the substrate engaging port 1212 is located in the substrate wet zone Z1212.

When the detection method is implemented, the detection module 12 is placed into the detection tank 11 such that the substrate dry zone Z1211 is disposed in the non-liquid accommodation space S112 to prevent the substrate detection unit 1211 from contacting the detection liquid L, and the substrate wet zone Z1212 is disposed in the liquid accommodation space S111 so that the substrate engaging port 1212 is immersed in the detection liquid L.

In addition, when the detection method is implemented, the signal cable 2 is immersed in the detection liquid L within the liquid accommodation space S111 to engage the substrate engaging port 1212. When the signal cable 2 engages the substrate engaging port 1212, the substrate detection unit 1211 generates a detection signal in the non-liquid accommodation space S112. The detection signal is transmitted to the signal cable 2 through the substrate engaging port 1212, thereby allowing the signal cable 2 to simulate operation in the detection liquid L and enabling detection of the signal transmission performance of the signal cable 2 in the detection liquid L. As a result, the signal transmission performance of the signal cable 2 in the detection liquid L can be compared with that in an atmospheric environment to determine whether there is any difference. In this way, the signal transmission performance of the signal cable 2 in the detection liquid L can be preliminarily detected before actual application.

In the embodiment shown in figure 1, the detection tank 11 further comprises a non-liquid space liquid guiding structure 111. The non-liquid space liquid guiding structure 111 is located in the non-liquid accommodation space S112 to guide the detection liquid L from the non-liquid accommodation space S112 to the liquid accommodation space S111. In this way, the substrate detection unit 1211 can be prevented from contacting the detection liquid L in the non-liquid accommodation space S112.

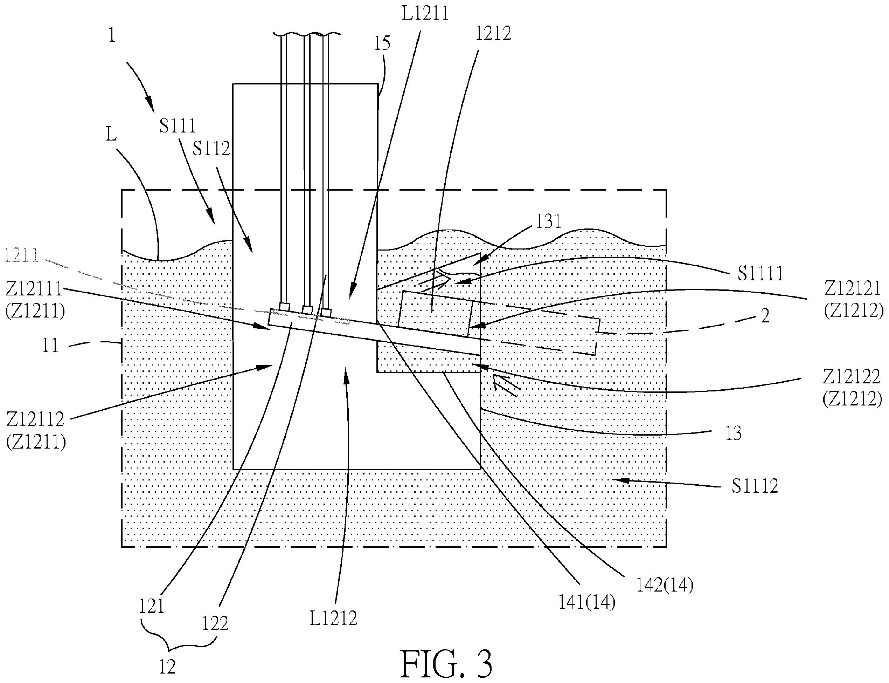

In the embodiment shown in figure 3, the substrate dry zone Z1211 is obliquely disposed in the non-liquid accommodation space S112 to guide the detection liquid L to flow in a specific direction away from the substrate dry zone Z1211. In this way, retention of the detection liquid L in the substrate dry zone Z1211 can be avoided.

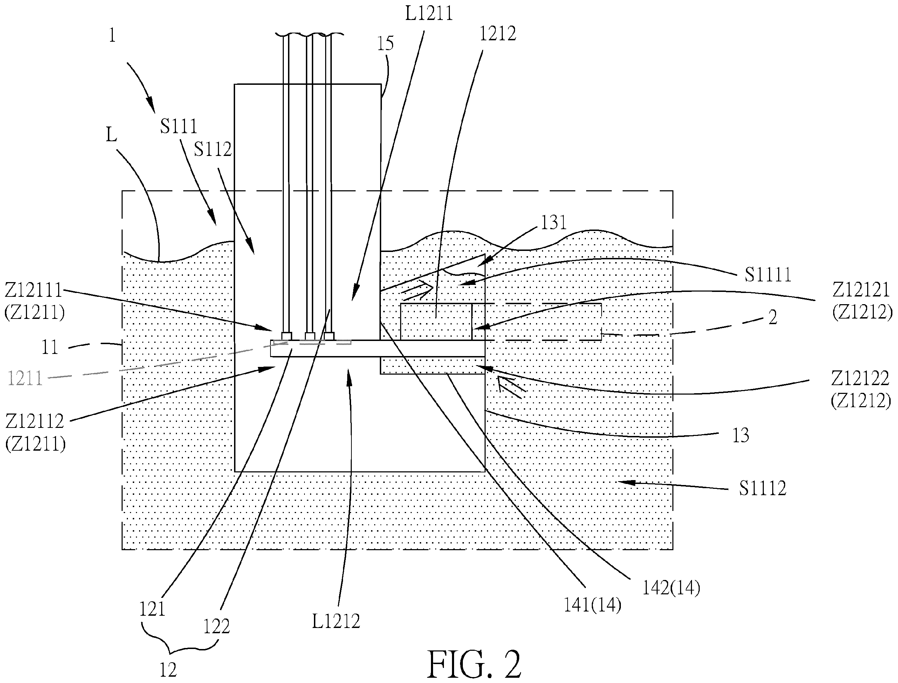

In the embodiments shown in figures 2 to 4, the detection module 12 further comprises a detection cable 122. Accordingly, the detection device 1 further comprises a detection tank cable guiding component 15. The detection tank cable guiding component 15 is assembled in the detection tank 11 to guide the detection cable 122 into the non-liquid accommodation space S112 such that the detection cable 122 is connected to the detection substrate 121 in the non-liquid accommodation space S112, thereby enabling the substrate detection unit 1211 to generate the detection signal.

In the above embodiment, the detection device 1 may optionally comprise a detection tank stopper component 13 and a substrate stopper component 14.

Regarding the detection tank stopper component 13, the detection tank stopper component 13 is assembled in the detection tank 11 and located between the liquid accommodation space S111 and the non-liquid accommodation space S112 to block the detection liquid L from seeping from the liquid accommodation space S111 into the non-liquid accommodation space S112. In this way, the detection liquid L is prevented from affecting the generation of the detection signal by the substrate detection unit 1211 in the non-liquid accommodation space S112.

In the above embodiment, the liquid accommodation space S111 comprises a substrate wet zone subspace S1111 and a non-substrate wet zone subspace S1112. It should be noted that the substrate wet zone Z1212 is disposed in the substrate wet zone subspace S1111. Accordingly, the detection tank stopper component 13 further comprises a detection tank stopper liquid guiding structure 131. The detection tank stopper liquid guiding structure 131 is located in the substrate wet zone subspace S1111 to guide the detection liquid L from the substrate wet zone subspace S1111 to the non-substrate wet zone subspace S1112, or from the non-substrate wet zone subspace S1112 to the substrate wet zone subspace S1111. In this way, the detection liquid L in the substrate wet zone subspace S1111 is kept in a flowing state, thereby facilitating heat dissipation for the substrate wet zone Z1212 disposed therein.

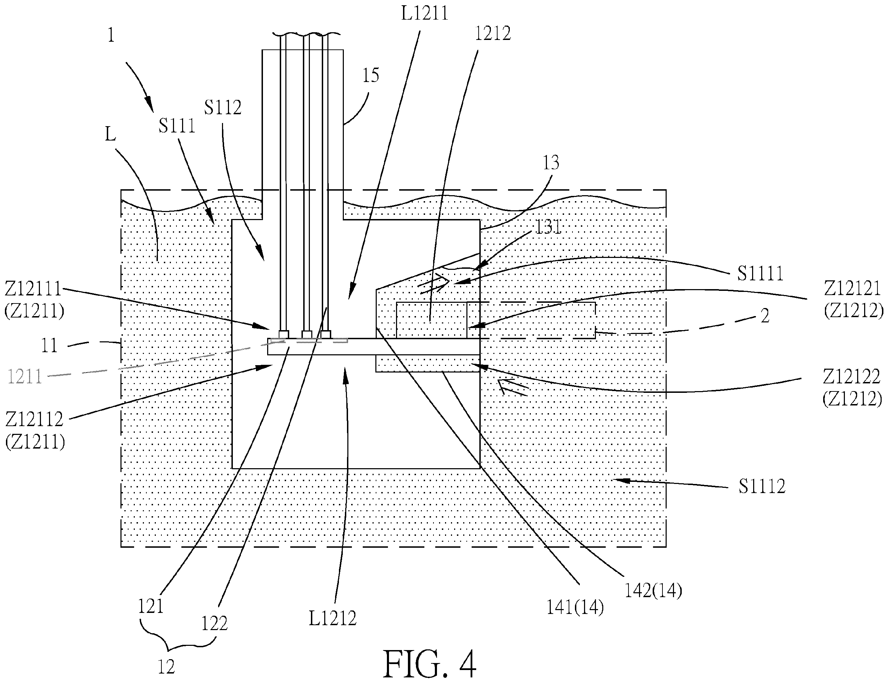

In the embodiment shown in figure 4, the detection tank stopper component 13 is a chamber component immersed in the detection liquid L. Accordingly, the non-liquid accommodation space S112 is a space located within the detection tank stopper component 13. It should be noted that, in the above embodiment, the detection tank cable guiding component 15 is a tubular component assembled in the detection tank 11 and passes through the detection tank stopper component 13 in the detection liquid L to enter the non-liquid accommodation space S112, thereby guiding the detection cable 122 in the detection liquid L into the non-liquid accommodation space S112 such that the detection cable 122 is connected to the detection substrate 121 in the non-liquid accommodation space S112, thereby enabling the substrate detection unit 1211 to generate the detection signal.

Regarding the substrate stopper component 14, the substrate stopper component 14 is assembled on the detection substrate 121 and located between the substrate dry zone Z1211 and the substrate wet zone Z1212 to block the detection liquid L from seeping from the substrate wet zone Z1212 into the substrate dry zone Z1211. In this way, the detection liquid L is prevented from affecting the generation of the detection signal by the substrate detection unit 1211 in the substrate dry zone Z1211.

Regarding the component of the substrate stopper component 14, it should be noted that the substrate stopper component 14 is movable in a longitudinal or transverse direction to reach a position for component onto the detection substrate 121, thereby assembling the substrate stopper component 14 on the detection substrate 121.

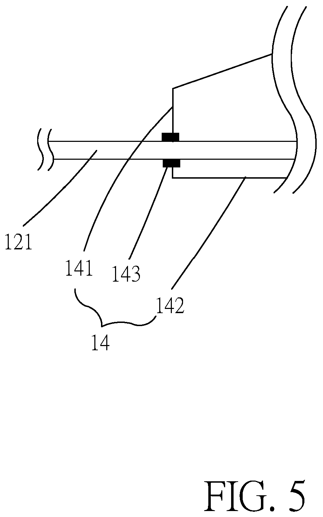

In the embodiment shown in figure 5, the substrate stopper component 14 is directly assembled on the substrate engaging port 1212 to reduce the spatial occupation of the substrate stopper component 14, thereby achieving a reduction in the size of the detection device 1.

In the embodiment shown in figure 5, the substrate stopper component 14 comprises a substrate stopper clamping structure 143. The substrate stopper clamping structure 143 is configured to clamp the detection substrate 121 to assemble the substrate stopper component 14 onto the detection substrate 121, thereby preventing separation between the substrate stopper component 14 and the detection substrate 121. It should be noted that, in other embodiments of the present application, the substrate stopper component 14 may alternatively be assembled on the detection substrate 121 by adhesive bonding to enhance signal transmission performance and prevent the detection liquid L from seeping from the substrate wet zone Z1212 into the substrate dry zone Z1211.

In the embodiments shown in figures 2 to 4, the detection substrate 121 further comprises a substrate engaging side L1211 and a substrate non-engaging side L1212. The substrate wet zone Z1212 comprises a substrate engaging side sub-wet zone Z12121 and a substrate non-engaging side sub-wet zone Z12122. The substrate engaging side sub-wet zone Z12121 is located at the substrate engaging side L1211, and the substrate engaging port 1212 is located in the substrate engaging side sub-wet zone Z12121. The substrate non-engaging side sub-wet zone Z12122 is located at the substrate non-engaging side L1212 and adjacent to the substrate engaging side sub-wet zone Z12121. The substrate dry zone Z1211 comprises a substrate engaging side sub-dry zone Z12111 and a substrate non-engaging side sub-dry zone Z12112. The substrate engaging side sub-dry zone Z12111 is located at the substrate engaging side L1211, and the substrate non-engaging side sub-dry zone Z12112 is located at the substrate non-engaging side L1212.

In the above embodiment, the substrate stopper component 14 comprises a substrate engaging side sub-stopper component 141 and a substrate non-engaging side sub-stopper component 142. The substrate engaging side sub-stopper component 141 is assembled on the substrate engaging side L1211. It should be noted that the substrate engaging side sub-stopper component 141 is located between the substrate engaging side sub-wet zone Z12121 and the substrate engaging side sub-dry zone Z12111 to block the detection liquid L from seeping from the substrate engaging side sub-wet zone Z12121 into the substrate engaging side sub-dry zone Z12111; and the substrate non-engaging side sub-stopper component 142 is assembled on the substrate non-engaging side L1212 and located between the substrate non-engaging side sub-wet zone Z12122 and the substrate non-engaging side sub-dry zone Z12112 to block the detection liquid L from seeping from the substrate non-engaging side sub-wet zone Z12122 into the substrate non-engaging side sub-dry zone Z12112.

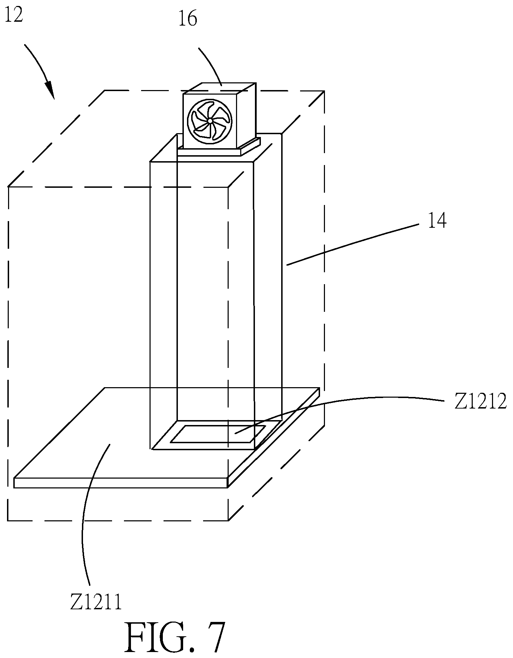

In the embodiment shown in figure 7, the detection device 1 further comprises a cooling fan 16. The cooling fan 16 is disposed on the substrate stopper component 14 and faces the substrate wet zone Z1212 to provide heat dissipation to the substrate wet zone Z1212 while detecting the signal transmission performance of the signal cable 2 in the detection liquid L, so that the temperature of the substrate wet zone Z1212 meets expectations.

It should be noted that the signal cable of the present application may omit certain steps, components, or structures, and is not limited to the above-described embodiments.

For example, the detection device of the present application comprises a detection tank and a detection module. The detection tank comprises liquid accommodation space and a non-liquid accommodation space, wherein the liquid accommodation space is configured to accommodate a detection liquid, and the signal cable is immersed in the detection liquid within the liquid accommodation space. The detection module comprises detection substrate, and the detection substrate comprises substrate dry zone, a substrate wet zone, a substrate detection unit, and a substrate engaging port, wherein the substrate detection unit is located in the substrate dry zone; the substrate engaging port is located in the substrate wet zone; and the detection module is inserted into the detection tank such that the substrate dry zone is disposed in the non-liquid accommodation space, enabling the substrate detection unit to generate a detection signal in the non-liquid accommodation space, and the substrate wet zone is disposed in the liquid accommodation space, allowing the substrate engaging port to engage the signal cable in the detection liquid to transmit the detection signal to the signal cable, thereby simulating the operation of the signal cable in the detection liquid and detecting the signal transmission performance of the signal cable in the detection liquid.

In addition, the detection method of the present application comprises: providing a detection tank, wherein the detection tank comprises liquid accommodation space and a non-liquid accommodation space, the liquid accommodation space being configured to accommodate a detection liquid; providing a detection module, wherein the detection module comprises detection substrate, the detection substrate comprising a substrate dry zone, a substrate wet zone, a substrate detection unit, and a substrate engaging port, wherein the substrate detection unit is located in the substrate dry zone; the substrate engaging port is located in the substrate wet zone; placing the detection module into the detection tank such that the substrate dry zone is disposed in the non-liquid accommodation space, and the substrate wet zone is disposed in the liquid accommodation space; and immersing the signal cable in the detection liquid within the liquid accommodation space to engage the substrate engaging port, and enabling the substrate detection unit to generate a detection signal in the non-liquid accommodation space, so as to transmit the detection signal to the signal cable through the substrate engaging port, thereby simulating the operation of the signal cable in the detection liquid and detecting the signal transmission performance of the signal cable in the detection liquid.

In summary, the present application provides a detection method and a corresponding detection device, which are configured to detect the signal transmission performance of a signal cable in a detection liquid. The detection device comprises a detection tank and a detection module. The detection tank comprises liquid accommodation space and a non-liquid accommodation space, and the liquid accommodation space is configured to accommodate the detection liquid, while the signal cable is immersed in the detection liquid within the liquid accommodation space. The detection module is configured to generate a detection signal in the non-liquid accommodation space and to engage the signal cable in the liquid accommodation space, so as to transmit the detection signal to the signal cable, thereby simulating the operation of the signal cable in the detection liquid and detecting the signal transmission performance of the signal cable.

The examples above are only illustrative to explain principles and effects of the invention, but not to limit the invention. It will be apparent to those skilled in the art that modifications and variations can be made without departing from the spirit and scope of the invention. Therefore, the protection range of the rights of the invention should be as defined by the appended claims.

## Claims

1. A detection device configured to detect signal transmission performance of a signal cable in a detection liquid, comprising:
a detection tank comprising a liquid accommodation space and a non-liquid accommodation space, wherein the liquid accommodation space is configured to accommodate the detection liquid, and the signal cable is immersed in the detection liquid within the liquid accommodation space; and
a detection module comprising a detection substrate, the detection substrate comprising a substrate dry zone, a substrate wet zone, a substrate detection unit, and a substrate engaging port, wherein the substrate detection unit is located in the substrate dry zone, the substrate engaging port is located in the substrate wet zone, and the detection module is inserted into the detection tank, such that the substrate dry zone is disposed in the non-liquid accommodation space, enabling the substrate detection unit to generate a detection signal in the non-liquid accommodation space, and the substrate wet zone is disposed in the liquid accommodation space, allowing the substrate engaging port to engage the signal cable in the detection liquid and transmit the detection signal to the signal cable, so as to make the signal cable perform a simulated signal transmission operation of the signal cable in the detection liquid and thereby to detect the signal transmission performance of the signal cable in the detection liquid.

2. The detection device of claim 1, further comprising a detection tank stopper assembly assembled in the detection tank and located between the liquid accommodation space and the non-liquid accommodation space, wherein the detection tank stopper assembly is configured to block the detection liquid from seeping from the liquid accommodation space into the non-liquid accommodation space, thereby preventing the detection liquid from affecting generation of the detection signal by the substrate detection unit.

3. The detection device of claim 2, wherein the liquid accommodation space comprises a substrate wet zone subspace and a non-substrate wet zone subspace, with the substrate wet zone being disposed in the substrate wet zone subspace, wherein the detection tank stopper assembly further comprises a detection tank stopper liquid guiding structure located in the substrate wet zone subspace and configured to guide the detection liquid to flow from the substrate wet zone subspace to the non-substrate wet zone subspace or from the non-substrate wet zone subspace to the substrate wet zone subspace.

4. The detection device of claim 2, wherein at least a portion of the detection tank stopper assembly is immersed in the detection liquid, and the non-liquid accommodation space is located within the detection tank stopper assembly.

5. The detection device of claim 4, wherein the detection module further comprises a detection cable, and the detection device further comprises a detection tank cable guiding assembly, wherein the detection tank cable guiding assembly is assembled in the detection tank and passes through the detection tank stopper assembly into the non-liquid accommodation space to guide the detection cable to enter the non-liquid accommodation space, such that the detection cable is connected to the detection substrate within the non-liquid accommodation space, enabling the substrate detection unit to generate the detection signal.

6. The detection device of claim 5, wherein the detection tank stopper assembly is a chamber-shaped component, and the detection tank cable guiding assembly is a tubular component.

7. The detection device of claim 1, further comprising a substrate stopper assembly assembled on the detection substrate and located between the substrate dry zone and the substrate wet zone, wherein the substrate stopper assembly is configured to block the detection liquid from seeping from the substrate wet zone into the substrate dry zone, thereby preventing the detection liquid from affecting generation of the detection signal by the substrate detection unit.

8. The detection device of claim 7, further comprising a cooling fan disposed on the substrate stopper assembly and facing the substrate wet zone to provide cooling for the substrate wet zone.

9. The detection device of claim 7, wherein the detection substrate further comprises a substrate engaging side and a substrate non-engaging side, and the substrate wet zone comprises a substrate engaging side sub-wet zone and a substrate non-engaging side sub-wet zone, wherein the substrate engaging side sub-wet zone is located at the substrate engaging side, the substrate engaging port is located in the substrate engaging side sub-wet zone, and the substrate non-engaging side sub-wet zone is located at the substrate non-engaging side and adjacent to the substrate engaging side sub-wet zone; the substrate dry zone comprises a substrate engaging side sub-dry zone and a substrate non-engaging side sub-dry zone, wherein the substrate engaging side sub-dry zone is located at the substrate engaging side, and the substrate non-engaging side sub-dry zone is located at the substrate non-engaging side; and the substrate stopper assembly comprises a substrate engaging side sub-stopper assembly and a substrate non-engaging side sub-stopper assembly, wherein the substrate engaging side sub-stopper assembly is assembled on the substrate engaging side and located between the substrate engaging side sub-wet zone and the substrate engaging side sub-dry zone and is configured to block the detection liquid from seeping from the substrate engaging side sub-wet zone into the substrate engaging side sub-dry zone, and the substrate non-engaging side sub-stopper assembly is assembled on the substrate non-engaging side and located between the substrate non-engaging side sub-wet zone and the substrate non-engaging side sub-dry zone and is configured to block the detection liquid from seeping from the substrate non-engaging side sub-wet zone into the substrate non-engaging side sub-dry zone.

10. The detection device of claim 7, wherein the substrate stopper component is assembled on the substrate engaging port.

11. The detection device of claim 7, wherein the substrate stopper component comprises a substrate stopper clamping structure configured to clamp the detection substrate so as to assemble the substrate stopper component onto the detection substrate.

12. The detection device of claim 7, wherein the substrate stopper assembly is movable in a longitudinal or transverse direction to reach a position for being assembled to the detection substrate, so as to assemble the substrate stopper assembly onto the detection substrate.

13. The detection device of claim 1, wherein the detection tank further comprises a non-liquid space liquid guiding structure located in the non-liquid accommodation space and configured to guide the detection liquid to flow from the non-liquid accommodation space to the liquid accommodation space.

14. The detection device of claim 1, wherein the substrate dry zone is obliquely disposed in the non-liquid accommodation space and is configured to guide the detection liquid to flow in a specific direction away from the substrate dry zone.

15. The detection device of claim 1, wherein the detection module further comprises a detection cable, and the detection device further comprises a detection tank cable guiding assembly assembled in the detection tank and configured to guide the detection cable to enter the non-liquid accommodation space, such that the detection cable is connected to the detection substrate in the non-liquid accommodation space, enabling the substrate detection unit to generate the detection signal.

16. A detection method configured to detect signal transmission performance of a signal cable in a detection liquid, the detection method comprising:
providing a detection tank, wherein the detection tank comprises a liquid accommodation space and a non-liquid accommodation space, and the liquid accommodation space is configured to accommodate the detection liquid;
providing a detection module, wherein the detection module comprises a detection substrate, the detection substrate comprising a substrate dry zone, a substrate wet zone, a substrate detection unit, and a substrate engaging port, wherein the substrate detection unit is located in the substrate dry zone, and the substrate engaging port is located in the substrate wet zone;
placing the detection module into the detection tank, such that the substrate dry zone is disposed in the non-liquid accommodation space, and the substrate wet zone is disposed in the liquid accommodation space; and
immersing the signal cable in the detection liquid within the liquid accommodation space to engage the substrate engaging port, and enabling the substrate detection unit to generate a detection signal in the non-liquid accommodation space and transmit the detection signal to the signal cable through the substrate engaging port, so as to make the signal cable perform a simulated signal transmission operation in the detection liquid, and thereby to detect the signal transmission performance of the signal cable in the detection liquid.
